# EUROPEAN PATENT SPECIFICATION

(11) **EP 0 577 199 B1**
(45) Date of publication and mention of the grant of the patent: **03.09.1997**
(21) Application number: 93201825.2
(22) Date of filing: 24.06.1993
(51) Int. Cl.: G11B 7/09

(54) **Electro-optical scanning device and player comprising the scanning device**
Elektrooptische Abtasteinrichtung und mit der Abtasteinrichtung versehener Spieler
Dispositif de balayage électro-optique et lecteur muni de ce dispositif

(30) Priority: 01.07.1992 EP 92201962
(43) Date of publication of application: 05.01.1994
(73) Proprietor: Philips Electronics N.V., 5621 BA Eindhoven (NL)
(72) Inventor: Aldenhoven, Ghislanus Matheus Antonius Maria, NL-5656 AA Eindhoven (NL); Wertelaers, Piet, NL-5656 AA Eindhoven (NL)
(74) Representative: Schrijnemaekers, Hubert Joannes Maria

(56) References cited:
- EP-A- 0 394 032
- EP-A- 0 464 912
- EP-A- 0 541 162
- WO-A-91/01549

## Description

The invention relates to an electro-optical scanning device comprising a stationary section, a section which is movable relative to said stationary section and which comprises a lens having an optical axis, and supporting means disposed between the stationary section and the movable section for movably supporting the movable section, which movable section is movable at least substantially along a first axis parallel to the optical axis, in order to form at least one radiation spot on a surface to be scanned, and at least substantially along a second axis oriented transversely of the optical axis, in order to follow a recording track in said surface, there being provided an electromagnetic actuator comprising first actuator means provided on the stationary section and second actuator means provided on the movable section, which actuator means cooperate magnetically with one another *via* an air gap in order to drive the movable section.

Such a scanning device is known from WO 91/01549. The known electro-optical scanning device has an objective lens for optically scanning a surface provided with information tracks. The objective lens, which has an optical axis, is mounted in a movably supported holder. The holder with the objective lens is movable parallel to the optical axis and parallel to the surface to be scanned. For this purpose the holder is pivotally connected to a support by means of two holding devices. The holding devices, which are wholly made of a plastics, each have two end parts, two intermediate parts and two central parts, which parts are interconnected by plastics integral hinges. It is generally known that plastics exhibit a creep effect in the course of time, particularly at higher temperatures. In the known scanning device, in which the supporting device for the objective is wholly made of a plastics, the creep effect leads to deformations of the integral hinges and, consequently, to deviations of the position and the orientation of the objective lens relative to the originally established references.

An accurate support is of great importance in order to maintain the position in the tracking direction and the orientation of the lens relative to the information tracks during scanning because current scanning systems do not have a reference for this, so that no corrections can be made. Deviations of the position of the lens in the focusing direction can generally be corrected because most scanning systems use the position of the surface to be scanned as a reference for the focusing position of the objective lens, but such corrections lead to an increased power consumption. Particularly in battery-powered apparatuses, especially portable apparatuses, an unnecessary power consumption may be very undesirable.

A scanning device as recited in the preamble of Claim 1 is known from EP-A-0 464 912.

It is an object of the invention to improve the scanning device of the type defined in the opening paragraph in such a manner that the position and the orientation of the lens remain accurately defined for a long time, even when the device is used under extreme conditions.

To this end the electro-optical scanning device in accordance with the invention comprises, inter alia, the features recited in the characterising portion of Claim 1.

In the electro-optical scanning device in accordance with the invention all the elastic functions are associated with the first elements which are rigidly connected to the second elements. Consequently, the scanning device is highly resistant to torsion about a third axis extending transversely of said first and second axes. This has the advantage that it precludes an oblique position of the optical axis of the lens relative to the surface to be scanned and hence a variation of the radiation spot. In this respect it is to be noted that the radiation spot has a minimum size dictated by the wavelength of the light source used and the numeral aperture of the lens. The light in the radiation source has a central bright portion surrounded by concentric annular portions of substantially lower intensity. When the centre of the radiation spot is situated on a recording track some of the light will also impinge on the adjacent tracks. As a result of this, the reflected light contains not only the information relating to the relevant recording track but also some information relating to the adjacent tracks. Radiation-sensitive electronic means detect the reflected radiation beam in order to obtain electrical signals corresponding to the information in the reflected radiation. The resulting crosstalk between adjacent recording tracks depends to a significant extent upon the light distribution in the radiation spot on the recording surface. The light distribution in the radiation spot is influenced not only by the optical quality of the radiation source itself but also by the oblique position of the radiation beam relative to the surface to be scanned. This is because the oblique position gives rise to coma and an increased light intensity to one side of the central portion. If the oblique position is oriented in a radial direction viewed from the axis of rotation of the rotating surface to be scanned this results in increased crosstalk between the recording track scanned by the radiation spot and an adjacent recording track.

The first elements in the scanning device in accordance with the invention can deflect while the lens performs focusing movements and can be twisted while the lens performs tracking movements. The first elements are made of a resilient material, such as a resilient plastics or a resilient metal, for example spring steel. The rigid second elements are preferably made of a plastics, in particular a plastics which can resist high temperatures. A suitable plastics for elements of both types is, for example, polycarbonate reinforced with carbon fibres. If the first elements are made of a metal their ends are preferably embedded in the second elements. The first elements are preferably integrated with the second elements if both types of elements are made of the same plastics. The frame-shaped supports are preferably injection-moulded products.

An embodiment of the electro-optical scanning device in accordance with the invention is characterised in that the first elements take the form of blade springs having a flat surface extending parallel to the first axis and the second axis. First elements of this construction have a high resistance to twisting about a third axis oriented transversely of the first axis and the second axis. As a result of this, the scanning unit has an excellent torsional stiffness, so that in operation variations of the position of the scanning spot relative to the track to be scanned and thus variations of the shape of the scanning spot remain within narrow limits. This is of particular importance for uses in which both recording and reproduction are possible, as is the case with for example CD-R players.

An embodiment is characterised in that at the location of its central portion the first elements of each support each have a fixing member, one fixing member being secured to the stationary section and the other fixing member being secured to the movable section. Securing is possible, for example, by clamping.

In order to preclude an undesired dynamic behaviour of the scanning unit an embodiment is characterised in that the frame-shaped supports each comprise at least one damping element. The function of the damping element is to prevent possible resonances, particularly in the movable section.

A practical embodiment is characterised in that the damping element is a damping pad and is clamped between the central portion of a first element and an end portion of a second element.

The damping element may be affixed to the central portion by means of an adhesive, in particularly a glue. Rubber, in particular butyl or acrylic rubber, is found to be a suitable damping material.

An embodiment is characterised in that the end portion adjoins a central portion of the relevant second element and can deflect elastically relative to the central portion in a direction parallel to said first axis. This embodiment is advantageous in particular in the manufacturing process. Mounting of the damping elements is simple because during mounting of these damping elements the end portions can be deflected elastically in order to temporarily increase the clearance to the central portions of the first elements. The arrangement and the size of the end portions is such that this does not significantly affect the desired stiffness of the second elements.

An embodiment is characterised in that the end portion has a knife-shaped rib which faces the damping element and extends parallel to said second axis. This embodiment specifically damps parasitic resonances of the movable section during operation.

The invention further relates to a player comprising an electro-optical scanning device in accordance with the invention, as well as a turntable and a slide, the slide carrying the scanning device and being movable along a radial path relative to the turntable. The player may be constructed as an optical player, for example a CD player or CD-I player, or as a magneto-optical player, for example a CD-R player.

The invention will now be described in more detail, by way of example, with reference to the drawings, in which
Figure 1 is an exploded view of an embodiment of the scanning device in accordance with the invention,
Figure 2 is a sectional view of the embodiment shown in Fig. 1, and
Figure 3 is a perspective view of a player comprising a device in accordance with the invention.

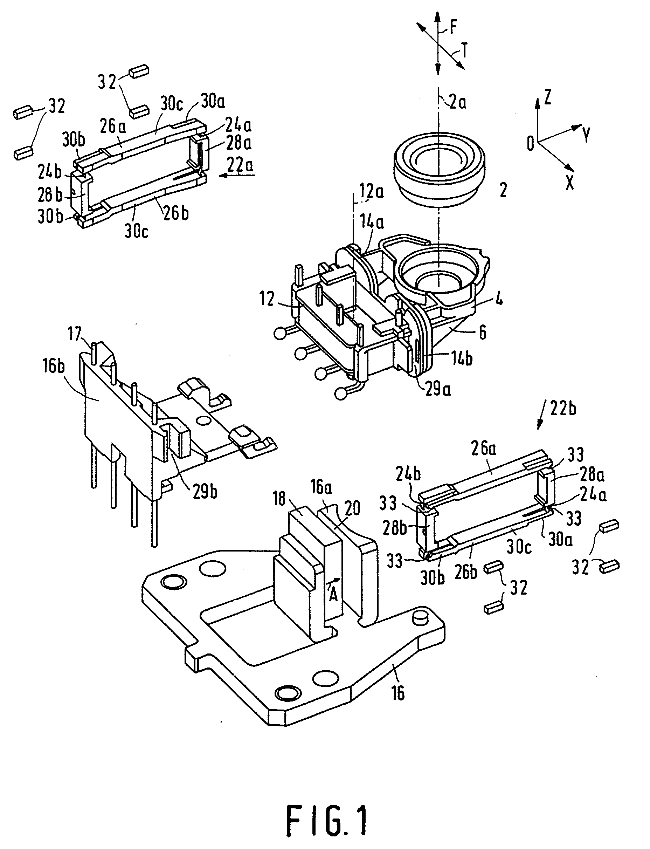

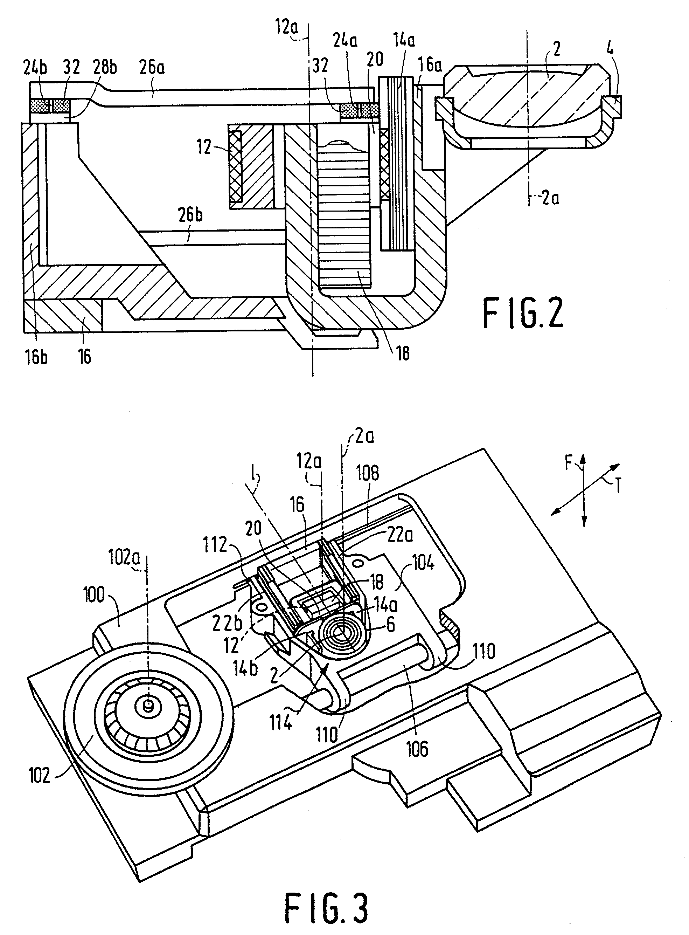

The electro-optical scanning device in accordance with the invention shown in Figs. 1 and 2 is a so-called 2D actuator and is intended for use in CD decks constructed for two-stage radial tracking of optical discs, for example CDs of 8 or 12 cm diameter and/or magneto-optical discs. In such a deck an objective can be translated along a radial path relative to a disc which is rotatable about an axis of rotation. For this purpose the deck comprises, for example, a translatable slide carrying the scanning device. By means of a radiation beam obtained from a laser and directed to the scanning device an information track of a rotating disc-shaped medium can be written and/or read without mechanical contact.

The scanning device in accordance with the invention is constructed in such a manner that the production can be automated almost fully in order to manufacture large quantities at minimal cost.

The scanning device in accordance with the invention comprises an objective lens 2 mounted in a lens holder 4 and having an optical axis 2a. The lens holder 4 forms part of a movable section 6 of the scanning device, which movable section further comprises a holder for a focusing coil 12 having a coil axis 12a parallel to the optical axis 2a, and a holder for a tracking coil 14a and 14b respectively.

The scanning device in accordance with the invention further has a stationary section 16 comprising a permanent magnet 18 and ferromagnetic parts. The magnet 18, which has been magnetised as indicated by means of an arrow A, constitutes a magnetic circuit with the ferromagnetic parts of the stationary section 16, a magnetic air gap 20 being formed between the magnet 18 and one of the ferromagnetic parts 16a. The focusing coil 12 and the tracking coils 14a and 14b extend partly into the air gap 20 and together with the magnet 18 and said ferromagnetic parts they form an electromagnetic actuator. The stationary section 16 further comprises a plastics part 16b having anchoring pins 17 for the coils 12, 14a and 14b.

The movable section 6 is movably connected to the stationary section 16 with the aid of supporting means. The movable section, in particular the lens 2, is movable relative to the stationary section in focusing directions indicated by a double arrow F and in tracking directions indicated by a double arrow T. Relative to a system of orthogonal axes having an origin O and a Z axis parallel to the optical axis 2a a focusing direction corresponds to the Z axis and a tracking direction to the X axis.

The supporting means comprise two frame-shaped supports 22a and 22b, which are each oriented transversely of a plane defined by the X axis and the Z axis. Each of the supports 22a and 22b comprises two first elements 24a and 24b in the form of blade springs and two elongate stiff second elements 26a and 26b. The first elements 24a and 24b, which are made of spring steel in the present example, have their ends embedded in the second elements 26a and 26b, which are made of a plastics, in the present example of polycarbonate. The first elements 24a and 24b have a flat surface extending parallel to the X axis and the Z axis and can deflect elastically about a transverse axis parallel to the X axis and can be twisted elastically about a longitudinal axis parallel to the Z axis. The first elements 24a and 24b each have a central portion encapsulated by a plastics fixing member 28a and 28b respectively, the fixing members 28a being secured to the movable section by means of a clamping construction 29a and the fixing members 28b being secured to the stationary section 16 by means of a clamping construction 29b.

Damping pads 32 are clamped between end portions 30a and 30b of the second elements 26a and 26b, which extend parallel to the Y axis of the defined system of orthogonal axes, and the fixing members 28a and 28b at the location of the central portions of the first elements 24a and 24b. At a side facing the damping pad each end portion 30a and 30b has a knife-shaped rib 33 which extends parallel to the X-axis and which presses resiliently against a damping pad. Both end portions 30a and 30b of each second element 26a and 26b can deflect elastically relative to a stiff central portion 30c in a direction parallel to the Z axis, which central portion is formed by the remainder of the relevant second element.

It is to be noted that the first axis, the second axis and the third axis mentioned in the introductory part of the description respectively correspond to the Z axis, the X axis and the Y axis of the defined system of orthogonal axes.

Fig. 3 shows a part of a CD player, in particular the deck of this player, employing an embodiment of the device in accordance with the invention. Parts of this embodiment which correspond to parts of the embodiment described above bear the same reference numerals.

The deck shown in Fig. 3 comprises a chassis 100 carrying a turntable 102, which can be driven by an electric motor, for supporting and centring an optical disc having an information track, for example a CD, the turntable 102 being rotatable about an axis of rotation 102a. The deck further comprises mechanical guide means for translating a slide 104 in a radial direction (indicated by an arrow T) relative to the turntable 102. The guide means comprise, for example, a guide rod 106 secured to the chassis 100 and a guide wall 108 which are adapted to cooperate respectively with sliding bushes 110 and sliding surfaces 112 of the slide 104. An electric motor, which is not shown and which is supported in the chassis, serves for driving the slide 104 directly or by means of a transmission mechanism.

The slide 104 carries an embodiment 114 of the scanning device in accordance with the invention and thus of the type as shown in Figs. 1 and 2, and a semiconductor laser. The scanning device 114 comprises a movable section 6 comprising an objective 2 having an optical axis 2a parallel to the axis of rotation 102a, a focusing coil 12 having a coil axis 12a, and two tracking coils 14a, 14b. The movable section 6 is connected to a stationary section 16 of the scanning device 104 by means of two supports 22a and 22b, which stationary section is secured to the slide 104 and comprises a magnetic circuit with a permanent magnet 18 adjoining a gap 20. The scanning device is so positioned relative to the slide 107 that its longitudinal axis 1 is oriented transversely of a plane defined by the axis of rotation 102a and the optical axis 2a, thus enabling the objective 2 to be moved both in the focusing direction F and the tracking direction T. The gap 20 extends in a tangential direction relative to the turntable 102.

In operation the slide 104 is moved along a radial path, indicated by the arrow T, relative to the axis of rotation 102a of the turntable 102 in order to achieve coarse tracking of an information track situated in an information plane of the rotating disc. Since the track may be slightly off-centred on the optical disc clamped on the turntable and since the turntable may also exhibit small radial deviations allowance is to be made for small radial excursions of the information track during rotation. The deviations which in operation may arise between the position of the scanning spot projected onto the disc by the objective and the position of the track portion to be scanned are reduced by means of a radial tracking system forming part of the scanning device 114 in that the lens 2 performs small high-frequency tracking movements as indicated by the arrow T.

It is to be noted that the invention is not limited to the embodiment shown herein. For example, it is also possible to make the first elements of a plastics and to integrate them with the second elements, enabling supports wholly made of a plastics to be obtained. Moreover, it is to be noted that the supports are preferably injection-moulded products.

## Claims

1. An electro-optical scanning device comprising a stationary section (16), a section (6) which is movable relative to said stationary section (16) and which comprises a lens (2) having an optical axis, and supporting means disposed between the stationary section (16) and the movable section (6) for movably supporting the movable section (6), which movable section (6) is movable at least substantially along a first axis parallel to the optical axis, in order to form at least one radiation spot on a surface to be scanned, and at least substantially along a second axis oriented transversely of the optical axis, in order to follow a recording track in said surface, there being provided an electromagnetic actuator comprising first actuator means (16a,18) provided on the stationary section (16) and second actuator means (12,14a,14b) provided on the movable section (6), which actuator means cooperate magnetically with one another *via* an air gap (20) in order to drive the movable section (6), the supporting means comprising two frame-shaped supports (22a,22b) which extend parallel to one another and which are oriented transversely of the first axis and the second axis, which supports each comprise two elongate spaced-apart first elements (24a,24b) which extend at least substantially parallel to the first axis, and two elongate spaced-apart second elements (26a,26b) which couple said two first elements (24a,24b) to one another, one of said two first elements (24b) having its central portion (28b), which is situated between said two second elements (26a,26b), secured to the stationary section (16), and the other first element (24a) having its central portion (28a), which is situated between said two second elements (26a,26b), secured to the movable section (6), characterised in that the first elements (24a,24b) can deflect elastically about a transverse axis parallel to the second axis, can be twisted elastically about a longitudinal axis parallel to the first axis and have their ends rigidly connected to the second elements (26a,26b), said second elements (26a,26b) being stiff.

2. An electro-optical scanning device as claimed in Claim 1, characterised in that the first elements (24a,24b) take the form of blade springs having a flat surface extending parallel to the first axis and the second axis.

3. An electro-optical scanning device as claimed in Claim 1 or 2, characterised in that at the location of its central portion (28a,28b) the first elements (24a,24b) of each support each have a fixing member, one fixing member being secured to the stationary section (16) and the other fixing member being secured to the movable section (6).

4. An electro-optical scanning device as claimed in Claim 1, 2 or 3, characterised in that the first elements (24a,24b) are made of a resilient material.

5. An electro-optical scanning device as claimed in Claim 1, 2, 3 or 4, characterised in that the second elements (26a,26b) are made of a plastics.

6. An electro-optical scanning device as claimed in Claim 4 or 5, characterised in that the first elements (24a,24b) are made of a metal and have their ends embedded in the second elements (26a,26b).

7. An electro-optical scanning device as claimed in Claims 4 and 5, characterised in that the first elements (24a,24b) are made of a plastics and are integrated with the second elements (26a,26b).

8. An electro-optical scanning device as claimed in any one of the Claims 1 to 7, characterised in that the frame-shaped supports each comprise at least one damping element (32).

9. An electro-optical scanning device as claimed in Claim 8, characterised in that the damping element (32) is a damping pad and is clamped between the central portion (28a,28b) of a first element (24a,24b) and an end portion of a second element (26a,26b).

10. An electro-optical scanning device as claimed in Claim 9, characterised in that the end portion adjoins a central portion (30c) of the relevant second element and can deflect elastically relative to the central portion in a direction parallel to said first axis.

11. An electro-optical scanning device as claimed in Claim 8 or 9, characterised in that the end portion has a knife-shaped rib (33) which faces the damping element (32) and extends parallel to said second axis.

12. An optical player comprising an electro-optical scanning device as claimed in any one of the preceding Claims, as well as a turntable (102) and a slide (104), the slide carrying the scanning device (114) and being movable along a radial path relative to the turntable (102).

## Patentansprüche

1. Elektrooptische Abtasteinrichtung mit einem ortsfesten Teil (16), einem demgegenüber verlagerbaren Teil (6) mit einer Linse (2) mit einer optischen Achse und mit zwischen dem ortsfesten Teil (16) und dem verlagerbaren Teil (6) vorgesehenen Lagermitteln zum beweglichen Unterstützen des verlagerbaren Teils (6), wobei dieser verlagerbare Teil (6) wenigstens nahezu gemäß einer sich parallel zu der optischen Achse erstreckenden ersten Achse zum Bilden mindestens eines Strahlungsflecks auf einer abzutastenden Oberfläche und wenigstens nahezu gemäß einer sich quer zu der optischen Achse erstreckenden zweiten Achse zum Befolgen einer Aufzeichnungsspur in der genannten Oberfläche beweglich ist, wobei ein elektromagnetischer Aktuator vorgesehen ist mit ersten Aktuatormitteln (16a, 18) an dem ortsfesten Teil (16) und mit zweiten Aktuatormitteln (12, 14a, 14b) an dem verlagerbaren Teil (6), wobei diese Aktuatormittel über einen Luftspalt (20) magnetisch miteinander zusammenarbeiten zum Antreiben des verlagerbaren Teils (6), wobei die Lagermittel zwei rahmenförmige Halterungen (22a, 22b) aufweisen, die sich parallel zueinander und sich quer zu der ersten Achse und zu der zweiten Achse erstrecken, wobei die Halterungen je zwei längliche in einem Abstand voneinander vorgesehene erste Elemente (24a, 24b) enthalten, die sich wenigstens im wesentlichen parallel zu der ersten Achse erstrecken, und zwei längliche in einem Abstand voneinander vorgesehene zweite Elemente (26a, 26b), welche die zwei ersten Elemente (24a, 24b) miteinander kuppeln, wobei der zwischen den genannten zwei zweiten Elementen (26a, 26b) liegende Mittenteil (23b) eines der genannten ersten Elemente (24b) an dem ortsfesten Teil (16) befestigt ist und wobei der zwischen den genannten zwei zweiten Elementen (26a, 26b) vorgesehene Mittenteil (28a) des anderen ersten Elementes (24a) an dem ortsbeweglichen Teil (6) befestigt ist, dadurch gekennzeichnet, daß die ersten Elemente (26a, 26b) sich um eine Querachse parallel zu der zweiten Achse elastich schwenken und um eine sich parallel zu der ersten Achse erstreckende Längsachse tordieren können und wobei die ersten Elemente an ihren Enden mit den zweiten Elementen (26a, 26b) starr verbunden sind, wobei diese zweiten Elemente (26a, 26b) starr sind.

2. Elektrooptische Abtasteinrichtung nach Anspruch 1, dadurch gekennzeichnet, daß die ersten Elemente (24a, 24b) blattfederförmig sind mit einer sich parallel zu der ersten Achse und der zweiten Achse erstreckenden blattförmigen Oberfläche.

3. Elektrooptische Abtasteinrichtung nach Anspruch 1 oder 2, dadurch gekennzeichnet, daß die ersten Elemente (26a, 26b) jedes Trägers an der Stelle des Mittenteils (28a, 28b) mit je einem Befestigungselement versehen sind, wobei ein Befesigungselement an dem ortsfesten Teil (16) und das andere an dem ortsbeweglichen Teil (6) befestigt ist.

4. Elektrooptische Abtasteinrichtung nach Anspruch 1, 2 oder 3, dadurch gekennzeichnet, daß die ersten Elemente (24a, 24b) aus einem biegsamen Material hergestellt sind.

5. Elektrooptische Abtasteinrichtung nach Anspruch 1, 2, 3 oder 4, dadurch gekennzeichnet, daß die zweiten Elemente (26a, 26b) aus einem Kunststoff hergestellt sind.

6. Elektrooptische Abtasteinrichtung nach Anspruch 4 oder 5, dadurch gekennzeichnet, daß die ersten Elemente (24a, 24b) aus einem Metall hergestellt und die Enden in den zweiten Elementen (26a, 26b) eingebettet sind.

7. Elektrooptische Abtasteinrichtung nach Anspruch 4 und 5, dadurch gekennzeichnet, daß die ersten Elemente (24a, 24b) aus einem Kunststoffhergestellt und mit den zweiten Elementen (26a, 26b) integriert sind.

8. Elektrooptische Abtasteinrichtung nach einem der vorstehenden Ansprüche 1 bis 7, dadurch gekennzeichnet, daß die rahmenförmigen Träger je wenigstens ein Dämpfungselement (32) aufweisen.

9. Elektrooptische Abtasteinrichtung nach Anspruch 8, dadurch gekennzeichnet, daß das Dämpfungselement (32) kissenförmig ist und zwischen dem Mittenteil (28a, 28b) eines ersten Elementes und einem Endteil eines zweiten Elementes (26a, 26b) eingeklemmt ist.

10. Elektrooptische Abtasteinrichtung nach Anspruch 9, dadurch gekennzeichnet, daß der Endteil an einen Mittenteil (30c) des betreffenden zweiten Elementes grenzt und gegenüber dem Mittenteil in einer sich parallel zu der derfinierten ersten Achse erstreckenden Richtung biegbar ist.

11. Elektrooptische Abtasteinrichtung nach Anspruch 8 oder 9, dadurch gekennzeichnet, daß der Endteil mit einer dem Dämpfungselement (32) zugewandten, sich parallel zu der definierten zweiten Achse erstreckenden messerförmigen Rippe (33) versehen ist.

12. Optische Spieler mit einer elektrooptischen Abtasteinrichtung nach einem der vorstehenden Ansprüche, sowie mit einem Plattenteller (102) und einem Schlitten (104), wobei der Schlitten die Abtasteinrichtung (114) trägt und über eine radiale Bahn gegenüber dem Plattenteller (102) verlagerbar ist.

## Revendications

1. Dispositif de balayage électro-optique comprenant une section stationnaire (16), une section (6) qui est déplaçable par rapport à ladite section stationnaire (16) et qui comprend une lentille (2) présentant un axe optique, et des moyens de support disposés entre la section stationnaire (16) et la section déplaçable (6) pour supporter de façon mobile la section déplaçable (6), laquelle section déplaçable (6) peut être déplacée au moins pratiquement le long d'un premier axe parallèle à l'axe optique, afin de former au moins un spot de rayonnement sur une surface à balayer, et au moins pratiquement le long d'un deuxième axe orienté transversalement à l'axe optique, afin de suivre une piste d'enregistrement dans ladite surface, un actionneur électromagnétique étant prévu et comprend des premiers moyens d'actionnement (16a, 18) disposés sur la section stationnaire (16) et des deuxièmes moyens d'actionnement (12, 14a, 14b) disposés sur la section déplaçable (6), lesquels moyens d'actionnement coopèrent magnétiquement les uns avec les autres par l'intermédiaire d'un entrefer (20) afin d'entraîner la section déplaçable (6), les moyens de support étant munis de deux supports en forme de châssis (22a, 22b) qui s'étendent parallèlement l'un par rapport à l'autre et qui sont orientés transversalement par rapport au premier axe et au deuxième axe, lesquels supports sont munis chacun de deux premiers éléments allongés, espacés (24a, 24b), qui s'étendent au moins pratiquement parallèlement au premier axe, et de deux deuxièmes éléments allongés, espacés (26a, 26b) assurant l'accouplage desdits deux premiers éléments (24a, 24b) l'un à l'autre, l'un desdits deux premiers éléments (24b) présentant une partie centrale (28b) située entre lesdits deux deuxièmes éléments (26a, 26b) fixés à la section stationnaire (16) et l'autre premier élément (24a) présentant une partie centrale (28a) située entre lesdits deux deuxièmes éléments (26a, 26b) fixés à la section déplaçable (6), caractérisé en ce que les premiers éléments (24a, 24b) peuvent fléchir élastiquement autour d'un axe transversal parallèle au deuxième axe et peuvent être tordus élastiquement autour d'un axe longitudinal parallèle au premier axe, lesdits deuxièmes éléments (26a, 26b) étant rigides.

2. Dispositif de balayage électro-optique selon la revendication 1, caractérisé en ce que les premiers éléments (24a, 24b) sont sous forme de ressorts à lames présentant une surface plane s'étendant parallèlement au premier axe et au deuxième axe.

3. Dispositif de balayage électro-optique selon la revendication 1 ou 2, caractérisé en ce qu'à l'endroit de leur partie centrale (28a, 28b), les premiers éléments (24a, 24b) de chaque support présentent chacun un élément de fixation, un élément de fixation étant fixé à la section stationnaire (16) et l'autre élément de fixation étant fixé à la section déplaçable (6).

4. Dispositif de balayage électro-optique selon la revendication 1, 2 ou 3, caractérisé en ce que les premiers éléments (24a, 24b) sont réalisés en un matériau élastique.

5. Dispositif de balayage électro-optique selon la revendication 1, 2, 3 ou 4, caractérisé en ce que les deuxièmes éléments (26a, 26b) sont réalisés en un matériau synthétique.

6. Dispositif de balayage électro-optique selon la revendication 4 ou 5, caractérisé en ce que les premiers éléments (24a, 24b) sont réalisés en un métal et leurs extrémités sont noyées dans les deuxièmes éléments (26a, 26b).

7. Dispositif de balayage électro-optique selon la revendication 4 et 5, caractérisé en ce que les premiers éléments (24a, 24b) sont réalisés en un matériau synthétique et ils sont intégrés aux deuxièmes éléments (26a, 26b).

8. Dispositif de balayage électro-optique selon l'une des revendications 1 à 7, caractérisé en ce que les supports en forme de châssis sont munis chacun d'au moins un élément d'amortissement (32).

9. Dispositif de balayage électro-optique selon la revendication 8, caractérisé en ce que l'élément d'amortissement (32) est un tampon d'amortissement et il est serré entre la partie centrale (28a, 28b) d'un premier élément (24a, 24b) et une partie terminale d'un deuxième élément (26a, 26b).

10. Dispositif de balayage électro-optique selon la revendication 9, caractérisé en ce que la partie terminale avoisine une partie centrale (30a) du deuxième élément en question et elle peut fléchir élastiquement par rapport à la partie centrale dans une direction parallèle audit premier axe.

11. Dispositif de balayage électro-optique selon la revendication 8 ou 9, caractérisé en ce que la partie terminale présente un rebord en forme de couteau (33) qui se situe vis-à-vis de l'élément d'amortissement (32) et qui s'étend parallèlement audit deuxième axe.

12. Tourne-disque optique muni d'un dispositif de balayage électro-optique selon l'une des revendications précédentes, ainsi que d'une plaque rotative (102) et d'un chariot (104), le chariot supportant le dispositif de balayage (114) et étant déplaçable le long d'un trajet radial par rapport à la plaque rotative (102).
